# EUROPEAN PATENT SPECIFICATION

(11) **EP 3 397 472 B1**
(45) Date of publication and mention of the grant of the patent: **05.05.2021**
(21) Application number: 16882361.5
(22) Date of filing: 20.12.2016
(51) Int. Cl.: B29D 30/52, B29D 30/00, B29D 30/60, B29C 48/30, B29C 48/92, B29C 48/07, B29C 48/35, B29C 48/12

(54) **TIRE WITH PRE-FORMED RIBBON TREAD AND METHOD OF MAKING SAME**
REIFEN MIT VORGEFORMTER BANDLAUFFLÄCHE UND VERFAHREN ZUR HERSTELLUNG DAVON
PNEU À BANDE DE ROULEMENT EN RUBAN PRÉFORMÉE ET SON PROCÉDÉ DE FABRICATION

(30) Priority: 30.12.2015 US 201562272868 P
(43) Date of publication of application: 07.11.2018
(73) Proprietor: Bridgestone Americas Tire Operations, LLC, Nashville, TN 37201 (US)
(72) Inventor: LUTES, William L., Franklin Tennessee 37064 (US); EVANS, Randall L., Franklin Tennessee 37064-2388 (US)
(74) Representative: Oxley, Robin John George
(86) International application number: PCT/US2016/067667
(87) International publication number: WO 2017/116822

(56) References cited:
- EP-A1- 1 657 050
- WO-A2-2010/065042
- JP-A- 2009 143 165
- US-A1- 2009 095 390
- US-A1- 2010 186 872
- US-A1- 2011 036 485
- US-A1- 2011 192 526
- US-A1- 2015 068 667

## Description

### FIELD OF INVENTION

This disclosure relates to the field of tire constructions and methods of tire construction. More particularly, the disclosure relates to tires with features such as lugs, bars, ribs, or tread blocks, and methods of making tires with these features. Further, the disclosure also describes agricultural and off road tires and methods of making agricultural and off road tires.

### BACKGROUND

Known tire manufacturing methods involve building a green tire, including a green tread, and vulcanizing the green tire and tread in a mold. The tread may be built by a ribbon treading process, in which a ribbon of green rubber is continuously applied in a spiral manner to a drum. When a green tire is placed in a mold, the volume between the green tire and the mold features must be filled with rubber. Thus, viscous rubber flows into the volume between the green tire and the mold features. The viscous rubber and green tire are cured during vulcanization. Attention is drawn to the disclosure of US2015/068667.

### SUMMARY OF THE INVENTION

In one embodiment, a method of manufacturing a tire tread includes extruding a rubber strip and conveying the rubber strip to a roller die that rotates about a roller die axis. The method further includes applying the rubber strip from the roller die onto a drum that rotates about a drum axis. The drum axis is substantially parallel to the roller die axis. The method also includes translating the roller die in a first direction parallel to the roller die axis while applying the rubber strip, thereby forming a spiral of the rubber strip about the drum. The method further includes varying a rotation speed of at least one of the roller die and the drum while translating the roller die, thereby creating positive or negative stretch in the rubber strip such that peaks and valleys are formed in the spiral of the rubber strip about the drum.

In another embodiment, a system for making a tire tread includes an extruder, a roller die having a first axis of rotation, and a conveyor having a first end proximate to the extruder and a second end proximate to the roller die, such that it receives a strip of green rubber extruded by the extruder and feeds the strip of green rubber to the roller die. The system further includes a drum having a second axis of rotation, wherein the roller die is configured to apply the strip of green rubber to the drum. The system also includes a controller, wherein the controller is configured to control a translation of the roller die in a first direction parallel to the first axis of rotation. The controller is configured to control a roller die rotation speed and a drum rotation speed, and the controller varies at least one of the roller die rotation speed and the drum rotation speed during translation of the roller die.

In yet another embodiment, a green tire tread includes a strip of green rubber having a first edge and a second edge. The strip of green rubber is wound about in a spiral, such that the first edge overlaps the second edge. A thickness of the strip of green rubber varies along the strip, such that the strip of green rubber has peaks and valleys. A first peak on a first portion of the strip of green rubber is adjacent a second peak on a second portion of the strip of green rubber that overlaps the first portion. A first valley on a third portion of the strip of green rubber is adjacent a second valley on a fourth portion of the strip of green rubber that overlaps the third portion.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a schematic drawing illustrating a side view of one embodiment of a system **100** for making a tire tread;
**Figure 1A** is schematic drawing of a detail view of a roller die in the system **100** for making a tire tread;
**Figure 2** is a partial perspective view of a prior art version of a tire tread strip that is spiral wound about a drum;
**Figure 3** is a partial perspective view of an exemplary embodiment of a tire tread strip that is spiral wound about a drum such that the tread strip has peaks and valleys; and
**Figure 4** is a top plan view of an exemplary tread design of a tire.

### DETAILED DESCRIPTION

The following includes definitions of selected terms employed herein. The definitions include various examples and/or forms of components that fall within the scope of a term and that may be used for implementation. The examples are not intended to be limiting. Both singular and plural forms of terms may be within the definitions.

"Axial" and "axially" refer to a direction that is parallel to the axis of rotation of a tire.

"Circumferential" and "circumferentially" refer to a direction extending along the perimeter of the surface of the tread perpendicular to the axial direction.

"Equatorial plane" refers to the plane that is perpendicular to the tire's axis of rotation and passes through the center of the tire's tread.

"Radial" and "radially" refer to a direction perpendicular to the axis of rotation of a tire.

"Tread" as used herein, refers to that portion of the tire that comes into contact with the road or ground under normal inflation and load.

While similar terms used in the following descriptions describe common tire components, it is understood that because the terms carry slightly different connotations, one of ordinary skill in the art would not consider any one of the following terms to be purely interchangeable with another term used to describe a common tire component.

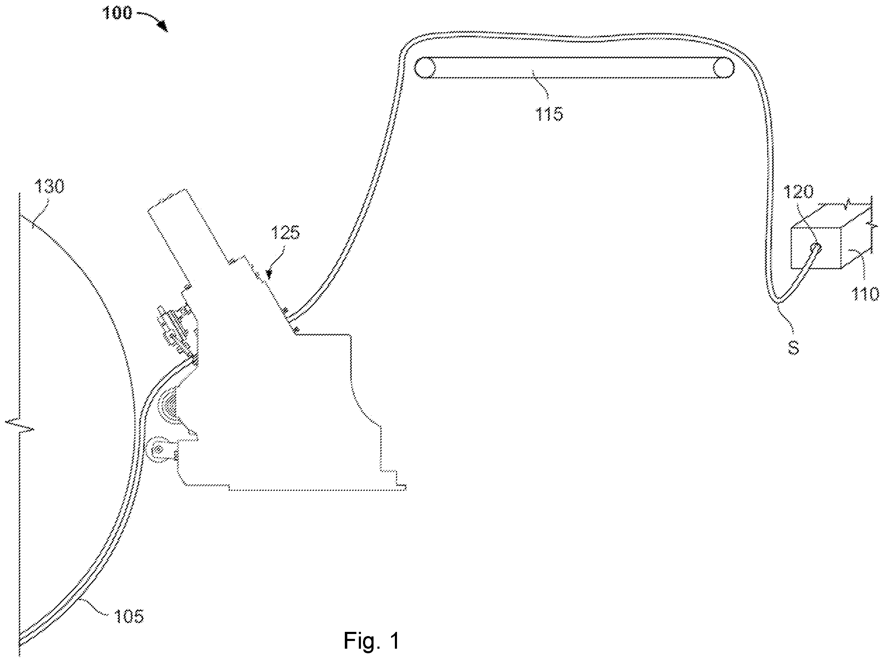

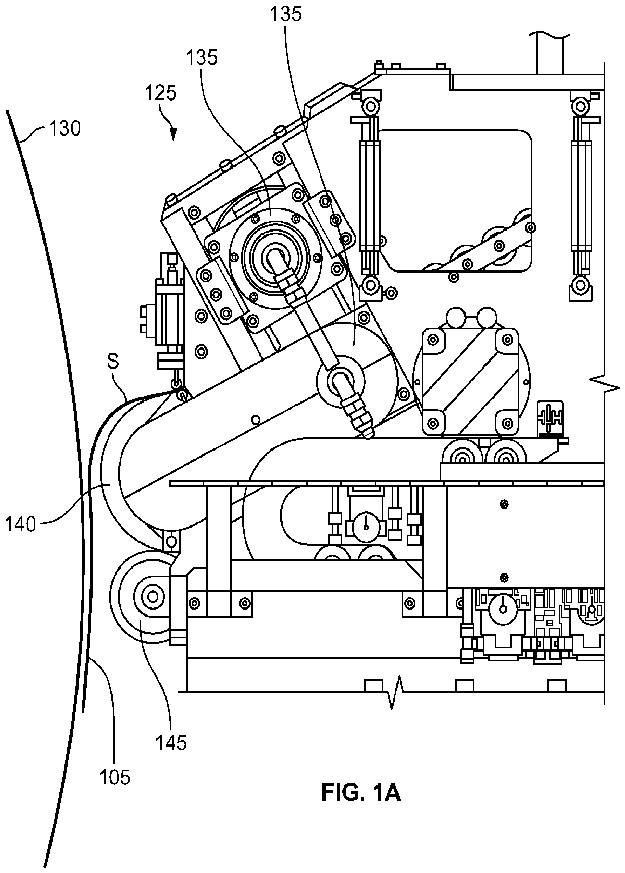

**Figure 1** is a schematic drawing illustrating a side view of one embodiment of a system **100** for making a green tread **105.** The system **100** includes an extruder **110** configured to receive a mixture of green rubber and eject it as a strip **S** onto a conveyor **115.** As one of ordinary skill in the art would understand, green rubber is rubber that has yet to be vulcanized. The system **100** is not limited to processing green rubber, however, and any polymeric material may be employed.

The extruder **110** has an opening **120** that defines the shape of the extruded strip **S.** Here, the opening **120** is round, so the resulting strip **S** has a circular or rounded cross-section. Such a rounded strip may also be referred to as a round ribbon or a round noodle. In alternative embodiments, the strip may have a rectangular, trapezoidal, triangular, or pentagonal, cross-section when it is extruded. In other alternative embodiments, the cross-section of the strip may be any geometric shape. The shape of the strip may be defined by a die plate that imparts a shape on the ribbon. Alternatively, the strip may be shaped by rollers as it is extruded.

The conveyor **115** has a first end proximate to the extruder **110** to receive the extruded strip **S.** The conveyor **115** is made of an inextensible material, such as polyester. Because the extrusion process warms the rubber, the strip **S** is tacky and sticks well against conveyor **115** without the need for adhesives. For example, in one known embodiment the temperature of the rubber is approximately 200° F (93° C). However, it should be understood that the rubber may be at any temperature. In an alternative embodiment, at least one side of the conveyor is coated with an adhesive or a resin to obtain proper adhesion to the green rubber strip.

In alternative embodiments (not shown), there may be loop points between the extruder and the conveyor entrance. Likewise, there may be loop points between the conveyor exit and the calendar/ roller die entrance. Such loop points may include a series of rollers (not shown) that define a meandering path for the strip **S.**

The conveyor **115** then feeds the strip of green rubber to a roller die **125,** which shapes the strip **S** and applies it onto a drum **130.** Additional details of the roller die **125** are shown in the detail view of **Figure 1A**. The roller die **125** includes a pair of shaping rollers **135** that press the round ribbon **R** into the strip **S.** In one embodiment, the strip has a rectangular cross-section with a width between 1.5-3.0 inches (3.8-7.6 cm), and a height between 0.25-0.375 inches (0.60-1.0 cm). However, it should be understood that the strip may have any desirable shape with any desirable dimensions.

As can be seen in this view, the strip **S** is adhered to a bottom surface of the conveyor **120.** The conveyor belt **120** loops around a front roller **140** and carried forward by an applicator wheel **140.** The rigidity of the strip **S** causes the strip to continue forward onto the drum **130.** In other words, the roller die **125** applies the strip **S** onto the drum **130.** In an alternative embodiment (not shown), separating means such as a knife may be employed to separate the strip from the conveyor surface.

In one embodiment, the applicator wheel **140** is spaced a fixed distance from the drum **130.** In an alternative embodiment, the spacing between the applicator wheel **140** and the drum **130** may vary. It may be desirable to position the applicator wheel **140** close to the drum to control the placement of the strip **S** on the drum **130.** For example, the distance between the applicator wheel **140** and the drum **130** may be approximately equal to the height of the strip **S** (*e.g.,* between 0.25-0.375 inches).

In the illustrated embodiment, the roller die further includes a stitching wheel **145** for pressing the strip **S** onto the drum **130.** The stitching wheel **145** may be connected to a damper that keeps the stitching wheel **145** in consistent contact with the strip **S,** such that the resulting tread has a smooth surface. The stitching wheel **145** may be coated with a synthetic resin to prevent it from sticking to the strip **S.** In an alternative embodiment, the stitching wheel may be omitted.

As can be seen in **Figures 1** and **1A****,** the applicator wheel **140** has a first axis of rotation and the drum **130** has a second axis of rotation that is substantially parallel to the first axis of rotation. The applicator wheel **140** and the drum **130** rotate in opposite directions, so that the strip is circumferentially wound about the drum **130.** For example, in the view shown in **Figure 1A**, the drum **130** rotates in a clockwise direction and the applicator wheel **140** rotates in a counterclockwise direction. In an alternative embodiment, the drum rotates in a counterclockwise direction and the front roller rotates in a clockwise direction.

The roller die **125** is configured to translate in a first direction parallel to the first axis of rotation while the drum **130** and the applicator wheel **140** each rotate. As a result, the strip **S** is spiral wound about the drum **130.** For example, the roller die **125** may translate along one or more rails that are parallel to the first axis of rotation.

In one embodiment, the roller die **125** translates from a first position to a second position, and then stops. The strip may then be cut to complete the formation of the green tread **105.** Such an embodiment may be referred to as a "single pass" embodiment. In an alternative embodiment, the roller die **125** translates from a first position to a second position in a first direction, and then translates from the second position to the first position in a second direction opposite the first direction, applying a second layer of the strip over the first layer. Such an embodiment may be referred to as a "multiple pass" embodiment. It should be understood that in other multiple pass embodiments, the roller die **125** may perform any number of passes. Additionally, the roller die may perform a partial pass. For example, it may be desirable to form thicker shoulder portions of a tire tread.

In another alternative embodiment, multiple roller dies may be employed. In such an embodiment, each roller die may perform a single pass to form a green tread. Alternatively, one or more of the roller dies may perform multiple passes to form multiple layers.

With reference back to **Figure 1****,** a controller **150** is in signal communication with the conveyor **115,** the roller die **125,** and the drum **130.** The controller **150** is configured to control the speed of the conveyor **115.** The controller **150** is also configured to control the translation of the roller die **125** in a direction parallel to its axis of rotation. The controller **150** is further configured to control the rotational speed of the roller die **125** (for example, by controlling the rotational speed of the applicator wheel **140**) and the rotational speed of the drum **130.** In one embodiment, the applicator wheel **140** is controlled by a timing belt.

The conveyor **115** may be a passive conveyor. In such an embodiment, the controller **150** would control the speed of the conveyor **115** and the rotational speed of the roller die simultaneously by controlling the speed of the timing belt. The controller may be a computer, a PLC, or other controller. While a single controller is shown in the illustrated embodiment, it should be understood that any number of controllers may be employed.

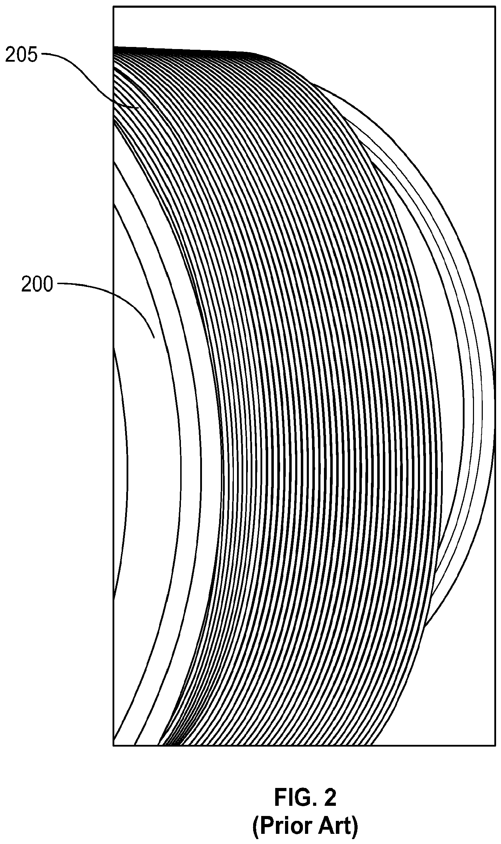

In one embodiment, the controller **150** can control the conveyor speed, the rotational speeds, and the roller die translational speed to produce a smooth, green ribbon tread. Such smooth, green ribbon treads are known in the prior art. An example of a prior art smooth, green ribbon tread is shown in **Figure 2****.** In this embodiment, a drum **200** holds the smooth, green ribbon tread **205.**

In the illustrated embodiment, the drum **200** is a collapsible drum. After the smooth, green ribbon tread **205** is completed, the drum **200** is collapsed so that the smooth, green ribbon tread **205** can be removed and then placed around a tire carcass (not shown) to form a green tire. The tire carcass includes a pair of annular beads configured to secure the tire to a wheel. The tire carcass further includes at least one body ply extending between the annular beads. The tire carcass also includes a circumferential belt configured to provide structural reinforcement to the tire. In general, the tread can be created on a separate belt tread drum, and then transferred to a forming drum where the body package is waiting. Alternatively, the tread can be wound directly onto the forming body package drum when the tire machine is a single drum type system.

The green tire is then placed in a vulcanization mold. The vulcanization mold includes a tread forming portion that imparts tread elements onto the tire. For example, the vulcanization mold may include a tread forming portion for an agricultural tire or off road tire that includes voids for forming lugs (or bars) on the tread, and protrusions for forming valleys between the lugs. During curing of the green tire, rubber flows into voids of the vulcanization mold. High amounts of rubber flow may cause deformation of the circumferential belt. To reduce the amount of rubber that must flow into the voids of the vulcanization mold, certain tread elements, such as bars, lugs, and ribs, may be pre-formed on the green tread.

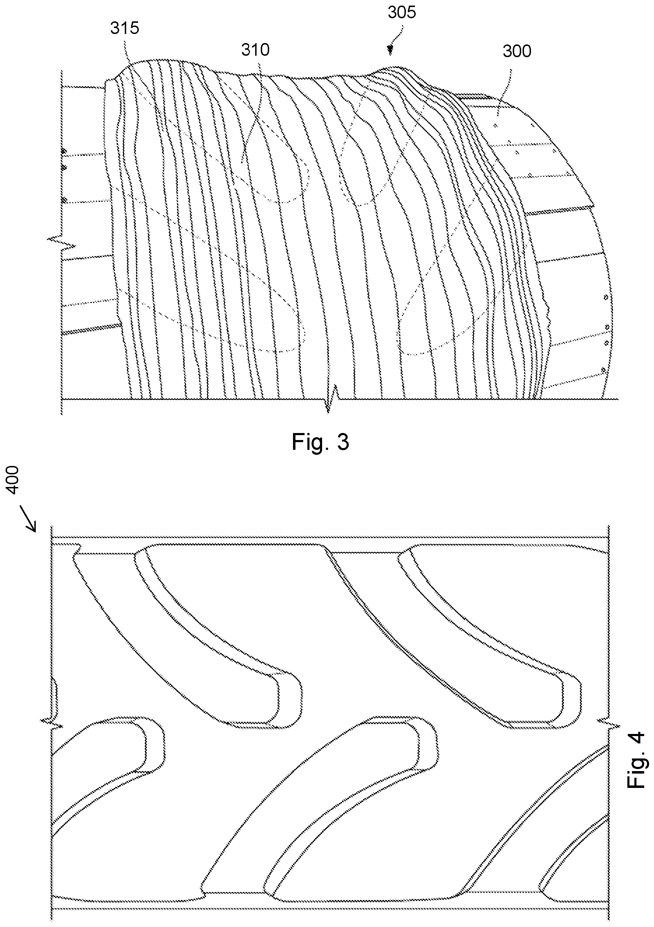

**Figure 3** illustrates another embodiment of a green ribbon tread. In this embodiment, a drum **300** holds a green ribbon tread **305** having pre-formed peaks **310** and valleys **315.** The peaks **310** and valleys **315** are formed by the controller **150** varying the speed of at least one of the conveyor **115,** the roller die rotational speed, and the drum rotational speed. When the roller die **125** and drum **130** rotate at substantially the same speed, the dimensions of the green rubber strip **S** will not substantially change when the strip is applied to the drum **130.** However, when the drum **130** rotates at a higher speed then the roller die **125,** the speed differential will cause the green rubber strip **S** to stretch as it is applied to the drum **130.** This stretching will cause the green ribbon tread **305** to have a reduced height. By contrast, when the roller die **125** rotates at a higher speed than the drum **130,** the speed differential will cause the green rubber strip **S** to compress (or be negatively stretched) as it is applied to the drum **130.** This compression will cause the green ribbon tread **305** to have a reduced height.

In one embodiment, the controller **150** creates the speed differential between the roller die **125** and the drum **130** by varying the rotational speed of the roller die **125** while maintaining the rotational speed of the drum **130** at a constant rate. For example, the rotational speed of the applicator wheel **140** of the roller die **125** may be varied while the rotational speed of the drum **130** is maintained at a constant rate. In one such an embodiment, the applicator wheel **140** is driven by calender motors (not shown). In an alternative embodiment (not shown), the applicator wheel **140** is driven by a separate servo motor or cam system. A timing belt may also be employed. The use of a separate servo motor or cam system allows the applicator wheel **140** to be driven at higher speeds. In preliminary testing, the applicator wheel **140** has been driven at feed rates between 10 kilograms per minute and 15 kilograms per minute when driven by calender motors. In additional testing, the applicator wheel **140** has been driven at feed rates between 10 kilograms per minute and 40 kilograms per minute when driven by separate servo motors.

In an alternative embodiment, the controller **150** creates the speed differential between the roller die **125** and the drum **130** by varying the rotational speed of the drum **130** while maintaining the rotational speed of the roller die **125** at a constant rate. In another alternative embodiment, the controller **150** creates the speed differential between the roller die **125** and the drum **130** by varying the rotational speeds of both the roller die **125** and the drum **130.**

In one embodiment, the controller **150** varies the rotational speeds of at least one of the roller die **125** and the drum **130,** such that the rotational speed of the drum **130** is between 0.5 times the rotation speed of the roller die **125** and 1.5 times the rotation speed of the roller die **125.** As a result, the rubber strip **S** is applied to the drum **130** at a rate between 10 kilograms per minute and 40 kilograms per minute. However, it should be understood that any rotational speeds and any feed rate may be employed.

The controller **150** controls the rotational speeds of the roller die **125** and the drum **130** in such a manner that a first peak on a first portion of the green rubber strip **S** is adjacent a second peak on a second portion of the green rubber strip **S** that overlaps the first portion. Additionally, the controller **150** controls the rotational speeds of the roller die **125** and the drum **130** in such a manner that a first valley on a third portion of the green rubber strip **S** is adjacent a second valley on a fourth portion of the green rubber strip **S** that overlaps the third portion.

In one embodiment, the controller **150** controls the rotational speeds of the roller die **125** and the drum **130** so that peaks and valleys are formed that correspond to lug forming portions of a tire mold. For example, **Figure 4** illustrates a top plan view of an exemplary tread design **400** of a tire. The peaks **310** and valleys **315** of the green ribbon tread **305** correspond to the lugs of the tread design **400.** As one of ordinary skill in the art would understand, increasing the similarity between peaks **310** and valleys **315** of the green ribbon tread **305** and the mold features will help to reduce rubber flow in the curing press. However, the shape of the green tread elements may depart from the geometry of a cured tread.

In one specific embodiment, the peaks **310** and valleys **315** of the green ribbon tread **305** generally correspond to a tread negative by occupying at least 40% of a cured tire's void and tread element volume. In another embodiment, the peaks **310** and valleys **315** of the green ribbon tread **305** generally correspond to larger voids in a tread. In this embodiment, the peaks **310** and valleys **315** of the green ribbon tread **305** generally correspond to the larger voids in a tread by occupying at least 30% of the cured tire's void volume. In another embodiment, the peaks **310** and valleys **315** of the green ribbon tread **305** closely correspond to the larger voids in a tread by occupying at least 80% of the cured tire's void volume.

In one embodiment, the thickness of the green ribbon tread **305** at a peak **310** is between 50% and 100% greater than the thickness of the green ribbon tread **305** at a valley **315.** In one particular embodiment, the thickness of the green ribbon tread **305** at a peak **310** is between 60% and 80% greater than the thickness of the green ribbon tread **305** at a valley **315.** In one known example, a thickness of the green ribbon tread **305** at a peak **310** is between 5 centimeters and 20 centimeters, and a thickness of the green ribbon tread **305** at a valley **325** is between 1 centimeter and 5 centimeters. As one of ordinary skill would understand, increased height of the peaks **310** is desirable for deep mold lugs because it would require less rubber movement during vulcanization. Additionally, using less rubber in the valleys **315** reduces the weight of the tire.

In one particular embodiment, the tread design is designed for use on an agricultural tire or off road tire. In this embodiment, the height of each lug is approximately 6% of the tire's width. In additional embodiments, the height of each lug is between 3-8% or 4-7% of the tire's width. In further embodiments, the height of each lug is between 6-35% of the tire's width. However, it should be understood that the lugs may have any height.

As one of ordinary skill in the art would recognize, the tread design may be used in agricultural tire constructions designated as R1, R1W, and R2 constructions, where R1 corresponds to a standard skid depth (Tire & Rim Association Standard AG-09-21), R1W corresponds to a skid depth that is 20% deeper than R1, and R2 corresponds to a skid depth that is 200% of R1. Additional examples of tires utilizing skids include, without limitation, drive wheels for agricultural vehicles, irrigation tires, forestry tires, floatation tires, combine tires, tractor tires, mining tires, construction tires, sprayer tires, and off-the-road vehicles.

In the illustrated embodiment, the drum **300** is a collapsible drum. After the green ribbon tread **305** is completed, the drum **300** is collapsed so that the green ribbon tread **305** can be removed and then placed around a tire carcass (not shown) to form a green tire. The green ribbon tread **305** may be formed at a first location and transported to a second location to be placed on the tire carcass. In an alternative embodiment, the green ribbon tread **305** is cured or partially cured prior to being placed on a tire carcass.

The tire carcass includes a pair of annular beads configured to secure the tire to a wheel. The tire carcass further includes at least one body ply extending between the annular beads. The tire carcass also includes a circumferential belt configured to provide structural reinforcement to the tire.

In one particular embodiment, the green ribbon tread **305** is stitched in place on the tire carcass with a stitching roller (not shown). The stitching roller may have voids corresponding to the peaks **310** of the green ribbon tread **305.**

The green tire is then placed in a vulcanization mold. The vulcanization mold includes a tread forming portion that imparts tread elements onto the tire. For example, the vulcanization mold may include a tread forming portion for an agricultural tire or off road tire that includes voids for forming lugs (or bars) on the tread, and protrusions for forming valleys between the lugs. The green tire is oriented in the vulcanization mold such that the peaks **310** of the green ribbon tread **305** are aligned with voids in the tread forming portion of the mold. During curing of the green tire, rubber flows into voids of the vulcanization mold. However, because of the alignment of the peaks **310** of the green ribbon tread **305,** less rubber needs to flow into the voids compared to a smooth green tread.

As one of ordinary skill in the art will appreciate, the methods and constructions described in this disclosure will increase yield. For instance, reducing the volume between the green tire and the mold features may help improve yield because it reduces rubber flow and resulting gauge variation (such as belt wave) in various reinforcing structures. The methods and constructions described in this disclosure may reduce gauge variation and/or belt wave, particularly in large tires and agricultural tires, where portions of the belt have been known to migrate toward a lug during vulcanization.

Likewise, the methods and constructions described in this disclosure may improve cord distortion and improve tire appearance. The methods and constructions described in this disclosure may also allow for rubber savings. For example, the methods and constructions described herein may require between approximately 10-20% less material and result in a tire having 20% less weight.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

## Claims

1. A method of manufacturing a tire tread comprising:
extruding a rubber strip (S);
conveying the rubber strip (S) to a roller die (125) that rotates about a roller die axis;
applying the rubber strip (S) from the roller die (125) onto a drum (130; 200; 300) that rotates about a drum axis, wherein the drum axis is substantially parallel to the roller die axis;
translating the roller die (125) in a first direction parallel to the roller die axis while applying the rubber strip (S), thereby forming a spiral of the rubber strip (S) about the drum (130; 200; 300); and
varying a rotation speed of at least one of the roller die (125) and the drum (130; 200; 300) while translating the roller die (125), thereby creating positive or negative stretch in the rubber strip (S) such that peaks (310) and valleys (315) are formed in the spiral of the rubber strip (S) about the drum (130; 200; 300).

2. The method of claim 1, wherein the varying the rotation speed of at least one of the roller die (125) and the drum (130; 200; 300) is controlled by a computer, and wherein the peaks (310) and valleys (315) are formed such that they correspond to lug forming portions of a tire mold.

3. The method of claim 1, wherein the varying the rotation speed of at least one of the roller die (125) and the drum (130; 200; 300) includes varying the rotation speed of only the roller die (125).

4. The method of claim 1, wherein the varying the rotation speed of at least one of the roller die (125) and the drum (130; 200; 300) includes varying the rotation speed of only the drum (130; 200; 300).

5. The method of claim 1, further comprising translating the roller die (125) in a second direction opposite to the first direction while applying the rubber strip (S), thereby forming a second layer of rubber over the spiral of the rubber strip (S) about the drum (130; 200; 300).

6. The method of claim 5, wherein the applying of the rubber strip (S), the translating of the roller die (125), and the varying of the rotation speed are performed until the peaks (310) have a height between 5 centimeters and 20 centimeters.

7. The method of claim 6, wherein the applying of the rubber strip (S), the translating of the roller die (125), and the varying of the rotation speed are performed until the valleys (315) have a height between 1 centimeter and 5 centimeters.

8. The method of claim 1, wherein the rotation speed of the drum (130; 200; 300) is between 0.5 times the rotation speed of the roller die (125) and 1.5 times the rotation speed of the roller die (125).

9. The method of claim 1, wherein the rubber strip (S) is applied to the drum (130; 200; 300) at a rate between 10 kilograms per minute and 40 kilograms per minute.

10. An system for manufacturing tire tread according to the method of any preceding claim, comprising:
an extruder (110);
a roller die (125) having a first axis of rotation;
a conveyor (115) having a first end proximate to the extruder (110) and a second end proximate to the roller die (125), such that it receives a strip (S) of green rubber extruded by the extruder (110) and feeds the strip (S) of green rubber to the roller die (125);
a drum (130; 200; 300) having a second axis of rotation,
wherein the roller die (125) is configured to apply the strip (S) of green rubber to the drum (130; 200; 300); and
a controller,
wherein the controller is configured to control a translation of the roller die (125) in a first direction parallel to the first axis of rotation, and
wherein the controller is configured to control a roller die rotation speed and a drum rotation speed, and wherein the controller varies at least one of the roller die rotation speed and the drum rotation speed during translation of the roller die (125).

11. The system of claim 10, wherein the roller die (125) includes a pair of shaping rollers (135).

12. The system of claim 10, further comprising at least one rail extending parallel to the first axis of rotation, wherein the roller die (125) is configured to translate along the at least one rail.

13. The system of claim 10, wherein the drum (130; 200; 300) is a collapsible drum (130; 200; 300).

14. The system of claim 10, wherein the roller die (125) includes a stitching roller (145), wherein the stitching roller (145) is configured to press the applied strip (S) of green rubber onto the drum (130; 200; 300).

15. The system of claim 10, wherein the controller is configured to control the roller die rotation speed and the drum rotation speed such that peaks (310) and valleys (315) are formed that correspond to lug forming portions of a tire mold.

## Patentansprüche

1. Verfahren zum Herstellen einer Reifenlauffläche, umfassend:
Extrudieren eines Kautschukstreifens (S);
Befördern des Kautschukstreifens (S) zu einem Rollenwerkzeug (125), das sich um eine Rollenwerkzeugachse dreht;
Aufbringen des Kautschukstreifens (S) von dem Rollenwerkzeug (125) auf eine Trommel (130; 200; 300), die sich um eine Trommelachse dreht, wobei die Trommelachse im Wesentlichen parallel zu der Rollenwerkzeugachse ist;
Verschieben des Rollenwerkzeugs (125) in eine erste Richtung parallel zur Rollenwerkzeugachse, während der Kautschukstreifen (S) aufgebracht wird, wodurch eine Spirale des Kautschukstreifens (S) um die Trommel (130; 200; 300) gebildet wird; und
Variieren einer Rotationsgeschwindigkeit von mindestens einem von dem Rollenwerkzeug (125) und der Trommel (130; 200; 300) während des Verschiebens des Rollenwerkzeugs (125), wodurch eine positive oder negative Dehnung in dem Kautschukstreifen (S) erzeugt wird, sodass Spitzen (310) und Täler (315) in der Spirale des Kautschukstreifens (S) um die Trommel (130; 200; 300) gebildet werden.

2. Verfahren nach Anspruch 1, wobei das Variieren der Drehgeschwindigkeit von mindestens einem von dem Rollenwerkzeug (125) und der Trommel (130; 200; 300) durch einen Computer gesteuert wird und wobei die Spitzen (310) und Täler (315) so ausgebildet sind, dass sie stollenbildenden Abschnitten einer Reifenform entsprechen.

3. Verfahren nach Anspruch 1, wobei das Variieren der Drehgeschwindigkeit von mindestens einem von dem Rollenwerkzeug (125) und der Trommel (130; 200; 300) das Variieren der Drehgeschwindigkeit von nur dem Rollenwerkzeug (125) einschließt.

4. Verfahren nach Anspruch 1, wobei das Variieren der Drehgeschwindigkeit von mindestens einem von dem Rollenwerkzeug (125) und der Trommel (130; 200; 300) das Variieren der Drehgeschwindigkeit von nur der Trommel (130; 200; 300) einschließt.

5. Verfahren nach Anspruch 1, ferner umfassend das Verschieben des Rollenwerkzeugs (125) in einer zweiten Richtung entgegengesetzt zu der ersten Richtung, während der Kautschukstreifen (S) aufgebracht wird, wodurch eine zweite Kautschukschicht über der Spirale des Kautschukstreifens (S) um die Trommel (130; 200; 300) gebildet wird.

6. Verfahren nach Anspruch 5, wobei das Aufbringen des Kautschukstreifens (S), das Verschieben des Rollenwerkzeugs (125) und das Variieren der Drehgeschwindigkeit durchgeführt werden, bis die Spitzen (310) eine Höhe zwischen 5 Zentimetern und 20 Zentimetern aufweisen.

7. Verfahren nach Anspruch 6, wobei das Aufbringen des Kautschukstreifens (S), das Verschieben des Rollenwerkzeugs (125) und das Variieren der Drehgeschwindigkeit durchgeführt werden, bis die Täler (315) eine Höhe zwischen 1 Zentimeter und 5 Zentimeter aufweisen.

8. Verfahren nach Anspruch 1, wobei die Drehgeschwindigkeit der Trommel (130; 200; 300) zwischen dem 0,5-fachen der Drehgeschwindigkeit des Rollenwerkzeugs (125) und dem 1,5-fachen der Drehgeschwindigkeit des Rollenwerkzeugs (125) liegt.

9. Verfahren nach Anspruch 1, wobei der Kautschukstreifen (S) mit einer Rate zwischen 10 Kilogramm pro Minute und 40 Kilogramm pro Minute auf die Trommel (130; 200; 300) aufgebracht wird.

10. System zum Herstellen einer Reifenlauffläche gemäß dem Verfahren nach einem der vorstehenden Ansprüche, umfassend:
einen Extruder (110);
ein Rollenwerkzeug (125) mit einer ersten Drehachse;
einen Förderer (115) mit einem ersten Ende in der Nähe des Extruders (110) und einem zweiten Ende in der Nähe des Rollenwerkzeugs (125), sodass er einen Streifen (S) aus Rohkautschuk, der durch den Extruder (110) extrudiert wird, aufnimmt und den Streifen (S) aus Rohkautschuk dem Rollenwerkzeug (125) zuführt;
eine Trommel (130; 200; 300) mit einer zweiten Drehachse,
wobei das Rollenwerkzeug (125) dazu konfiguriert ist, den Streifen (S) aus Rohkautschuk auf die Trommel (130; 200; 300) aufzubringen; und
eine Steuerung,
wobei die Steuerung dazu konfiguriert ist, eine Verschiebung des Rollenwerkzeugs (125) in einer ersten Richtung parallel zur ersten Drehachse zu steuern, und
wobei die Steuerung dazu konfiguriert ist, eine Rollenwerkzeugdrehgeschwindigkeit und eine Trommeldrehgeschwindigkeit zu steuern, und wobei die Steuerung die Rollenwerkzeugdrehgeschwindigkeit und/oder die Trommeldrehgeschwindigkeit während der Verschiebung des Rollenwerkzeugs (125) variiert.

11. System nach Anspruch 10, wobei das Rollenwerkzeug (125) ein Paar Formwalzen (135) aufweist.

12. System nach Anspruch 10, ferner umfassend mindestens eine Schiene, die sich parallel zu der ersten Drehachse erstreckt, wobei das Rollenwerkzeug (125) dazu konfiguriert ist, sich entlang der mindestens einen Schiene zu verschieben.

13. System nach Anspruch 10, wobei die Trommel (130; 200; 300) eine faltbare Trommel (130; 200; 300) ist.

14. System nach Anspruch 10, wobei das Rollenwerkzeug (125) eine Heftrolle (145) aufweist, wobei die Heftwalze (145) dazu konfiguriert ist, den aufgebrachten Streifen (S) aus Rohkautschuk auf die Trommel (130; 200; 300) zu pressen.

15. System nach Anspruch 10, wobei die Steuerung dazu konfiguriert ist, die Rollenwerkzeugdrehgeschwindigkeit und die Trommeldrehgeschwindigkeit so zu steuern, dass Spitzen (310) und Täler (315) gebildet werden, die stollenbildenden Abschnitten einer Reifenform entsprechen.

## Revendications

1. Procédé de fabrication d'une bande de roulement de pneu comprenant :
l'extrusion d'une bande de caoutchouc (S) ;
le transport de la bande de caoutchouc (S) vers une matrice à rouleau (125) qui tourne autour d'un axe de matrice à rouleau ;
l'application de la bande de caoutchouc (S) à partir de la matrice à rouleau (125) sur un tambour (130 ; 200 ; 300) qui tourne autour d'un axe de tambour, dans lequel l'axe de tambour est essentiellement parallèle à l'axe de matrice à rouleau ;
le déplacement par translation de la matrice à rouleau (125) dans une première direction parallèle à l'axe de matrice à rouleau tout en appliquant la bande de caoutchouc (S), ce qui forme une spirale de la bande de caoutchouc (S) autour du tambour (130 ; 200 ; 300) ; et
la variation d'une vitesse de rotation d'au moins l'un parmi la matrice à rouleau (125) et le tambour (130 ; 200 ; 300) tout en déplaçant par translation la matrice à rouleau (125), ce qui crée un étirement positif ou négatif dans la bande de caoutchouc (S) de telle sorte que des crêtes (310) et des vallées (315) sont formées dans la spirale de la bande de caoutchouc (S) autour du tambour (130 ; 200 ; 300).

2. Procédé selon la revendication 1, dans lequel la variation de la vitesse de rotation d'au moins l'un parmi la matrice à rouleau (125) et le tambour (130 ; 200 ; 300) est commandée par un ordinateur, et dans lequel les crêtes (310) et vallées (315) sont formées de telle sorte qu'elles correspondent à des parties de formation de barrette d'un moule à pneu.

3. Procédé selon la revendication 1, dans lequel la variation de la vitesse de rotation d'au moins l'un parmi la matrice à rouleau (125) et le tambour (130 ; 200 ; 300) inclut la variation de la vitesse de rotation uniquement de la matrice à rouleau (125).

4. Procédé selon la revendication 1, dans lequel la variation de la vitesse de rotation d'au moins l'un parmi la matrice à rouleau (125) et le tambour (130 ; 200 ; 300) inclut la variation de la vitesse de rotation uniquement du tambour (130 ; 200 ; 300).

5. Procédé selon la revendication 1, comprenant en outre le déplacement par translation de la matrice à rouleau (125) dans une deuxième direction opposée à la première direction tout en appliquant la bande de caoutchouc (S), ce qui forme une deuxième couche de caoutchouc par-dessus la spirale de la bande de caoutchouc (S) autour du tambour (130 ; 200 ; 300).

6. Procédé selon la revendication 5, dans lequel l'application de la bande de caoutchouc (S), le déplacement par translation de la matrice à rouleau (125), et la variation de la vitesse de rotation sont mis en oeuvre jusqu'à ce que les crêtes (310) aient une hauteur entre 5 centimètres et 20 centimètres.

7. Procédé selon la revendication 6, dans lequel l'application de la bande de caoutchouc (S), le déplacement par translation de la matrice à rouleau (125), et la variation de la vitesse de rotation sont mis en oeuvre jusqu'à ce que les vallées (315) aient une hauteur entre 1 centimètre et 5 centimètres.

8. Procédé selon la revendication 1, dans lequel la vitesse de rotation du tambour (130 ; 200 ; 300) est comprise entre 0,5 fois la vitesse de rotation de la matrice à rouleau (125) et 1,5 fois la vitesse de rotation de la matrice à rouleau (125).

9. Procédé selon la revendication 1, dans lequel la bande de caoutchouc (S) est appliquée au tambour (130 ; 200 ; 300) à un débit entre 10 kilogrammes par minute et 40 kilogrammes par minute.

10. Système de fabrication d'une bande de roulement de pneu selon le procédé de l'une quelconque revendication précédente, comprenant :
une extrudeuse (110) ;
une matrice à rouleau (125) ayant un premier axe de rotation ;
un convoyeur (115) ayant une première extrémité à proximité de l'extrudeuse (110) et une deuxième extrémité à proximité de la matrice à rouleau (125), de telle sorte qu'il reçoit une bande (S) de caoutchouc cru extrudée par l'extrudeuse (110) et alimente la bande (S) de caoutchouc cru à la matrice à rouleau (125) ;
un tambour (130 ; 200 ; 300) ayant un deuxième axe de rotation,
dans lequel la matrice à rouleau (125) est configurée pour appliquer la bandelette (S) de caoutchouc cru au tambour (130 ; 200 ; 300) ; et
un contrôleur,
dans lequel le contrôleur est configuré pour commander une translation de la matrice à rouleau (125) dans une première direction parallèle au premier axe de rotation, et
dans lequel le contrôleur est configuré pour commander une vitesse de rotation de matrice à rouleau et une vitesse de rotation de tambour, et dans lequel le contrôleur fait varier au moins l'une parmi la vitesse de rotation de matrice à rouleau et la vitesse de rotation de tambour pendant une translation de la matrice à rouleau (125).

11. Système selon la revendication 10, dans lequel la matrice à rouleau (125) inclut une paire de rouleaux de mise en forme (135).

12. Système selon la revendication 10, comprenant en outre au moins un rail s'étendant parallèle au premier axe de rotation, dans lequel la matrice à rouleau (125) est configurée pour se déplacer en translation le long de l'au moins un rail.

13. Système selon la revendication 10, dans lequel le tambour (130 ; 200 ; 300) est un tambour rétractable (130 ; 200 ; 300).

14. Système selon la revendication 10, dans lequel la matrice à rouleau (125) inclut un rouleau de rouletage (145), dans lequel le rouleau de rouletage (145) est configuré pour presser la bande appliquée (S) de caoutchouc cru sur le tambour (130 ; 200 ; 300).

15. Système selon la revendication 10, dans lequel le contrôleur est configuré pour commander la vitesse de rotation de matrice à rouleau et la vitesse de rotation de tambour de telle sorte que des crêtes (310) et vallées (315) sont formées lesquelles correspondent à des parties de formation de barrette d'un moule à pneu.
